# EUROPEAN PATENT APPLICATION

(11) **EP 2 527 690 A2**
(43) Date of publication of application: **28.11.2012**
(21) Application number: 12168889.9
(22) Date of filing: 22.05.2012
(51) Int. Cl.: F16H 33/02

(54) **Transmission shaft having centrifugal device and transmission method thereof**

(30) Priority: 23.05.2011 TW 100117886
(71) Applicant: Shen Yang Technologies Enterprise Co., Ltd., Pingzhen City 324, Taoyuan (TW)
(72) Inventor: Tsai, Hui Yen, 10861 Taipei City (TW); Cheng, Wen-Lon, 80445 Kaohsiung City (TW); Fan, Chiu-Rong, 32750 Taoyuan County (TW); Chuang, Tien, 61453 Chiayi County (TW)
(74) Representative: Knights, Rupert

(57) **Abstract**

A transmission shaft (22) is disposed between a driving device (18) and at least one driven device (28). At least one centrifugal device (24) is disposed on the transmission shaft. The centrifugal device generates a centrifugal force and applies an inertia affect formed by the centrifugal force to the transmission shaft, so as to drive the transmission shaft to rotate. Energy generated by the driven device (28) is greater than energy consumed when the driving device drives the driven device, thereby effectively reducing the consumption of earth resources and effectively solving a problem of earth environmental protection.

## Description

### BACKGROUND OF THE INVENTION

### Field of Invention

The present invention relates to a transmission shaft having a centrifugal device and disposed between a driving device and a driven device, and a transmission method thereof.

### Related Art

As people's quality of life improves gradually, electrical appliances and power equipment (such as cars and steamships) are widely used in life or work. And energy resources of the electrical appliances and the power equipment are mostly petroleum, natural gas, solar energy and nuclear power. However, such energy resources all have problems, for example, the energy resources may be exhausted, or have technical problem to be solved in usage, or have great danger in use.

When a transmission shaft transmits motive power to a power generation device to generate electric power, or transmits motive power to a power device to generate a driving force, a driving device and a driven device both have energy dissipation, and the transmission shaft also has energy loss during transmission. As a result, an entire efficiency is reduced, and therefore more energy needs to be consumed, thereby causing more problems of earth environmental protection.

### SUMMARY OF THE INVENTION

The present invention provides a transmission shaft having a centrifugal device. When a driven device generates a certain amount of energy, the transmission shaft having the centrifugal device may reduce energy consumed by a driving device to drive the driven device, and may further make energy generated by the driven device greater than the energy consumed by the driving device to drive the driven device, thereby effectively reducing consumption of earth resources and effectively solving a problem of earth environmental protection.

The present invention provides a transmission shaft, which is disposed between a driving device and at least one driven device.

At least one centrifugal device is disposed on the transmission shaft. The at least one centrifugal device generates a centrifugal force and applies an inertia effect formed by the centrifugal force on the transmission shaft, so as to drive the transmission shaft to rotate.

In the transmission shaft according to the present invention, the driving device rotates the transmission shaft and propels the at least one centrifugal device. The transmission shaft rotates the at least one driven device.

In the transmission shaft according to the present invention, the at least one driven device is one of a generator, and a motion mechanism of a car or a steamship.

In the transmission shaft according to the present invention, a transmission is disposed between the driving device and the transmission shaft, and the transmission is a continuous variable transmission or a non-continuous variable transmission.

In the transmission shaft according to the present invention, a rotational speed of a motor is controlled by a controller.

In the transmission shaft according to the present invention, the driving device is one of a water turbine, a gas turbine, a motor, an engine, a turbine, a steam engine, and a blade.

In the transmission shaft according to the present invention, the motor is one of a direct current (DC) motor, an alternating current (AC) motor, a magnetic levitation motor and a permanent-magnet motor, and the controller is one of a server and a frequency converter.

In the transmission shaft according to the present invention, a power supply of the controller is provided through a converter converting a low voltage of a power storage device to a high voltage.

In the transmission shaft according to the present invention, the at least one driven device produces electric power to charge the power storage device.

In the transmission shaft according to the present invention, the power storage device is one of a lead acid battery, a nickel-metal hydride battery and a lithium battery.

In the transmission shaft according to the present invention, a rotational speed of the transmission shaft is detected by a rotational speed sensor. A rotational speed signal detected by the rotational speed sensor is transmitted to the controller, and the controller controls the motor according to the rotational speed signal.

The present invention provides a transmission method of a transmission shaft, in which the transmission shaft is disposed between a driving device and at least one driven device. The transmission method comprises the following steps:
generating, by at least one centrifugal device disposed on the transmission shaft, a centrifugal force; and
applying an inertia effect formed by the centrifugal force to the transmission shaft, so as to drive the transmission shaft to rotate.

The transmission method according to the present invention further comprises the following steps:
rotating, by the driving device, the transmission shaft, and propelling the centrifugal device; and
rotating, by the transmission shaft, the at least one driven device.

In the transmission method according to the present invention, a transmission changes a rotational speed of the driving device and drives the transmission shaft with the changed rotational speed.

The transmission method according to the present invention further comprises the following steps:
converting a low voltage of a power storage device to a high voltage, and providing the high voltage to a controller;
controlling, by the controller, running of the driving device according to the rotational speed of the transmission shaft; and
producing, by the at least one driven device, electric power to charge the power storage device.

### BRIEF DESCRIPTION OF THE DRAWINGS

FIG. 1 is a system architectural view of a closed energy recirculation system having a transmission shaft according to the present invention;
FIG. 2 is a schematic view of a connection relation among a transmission, a motor and a transmission shaft according to the present invention; and
FIG. 3 is a schematic view of a centrifugal device disposed on a transmission shaft according to the present invention; and
FIG. 4 is a system architectural view of another closed energy re-circulation system having a transmission shaft according to the present invention.

### DETAILED DESCRIPTION OF THE INVENTION

A transmission shaft of the present invention is disposed between a driving device and at least one driven device, and at least one centrifugal device is disposed on the transmission shaft. The driving device may be a water turbine, a gas turbine, a motor, an engine, a turbine, a steam engine or a blade (applied to a wind driven generator). The at least one driven device may be a generator or a motion mechanism (such as a wheel or a screw-propeller) of a car or a steamship.

The driving device rotates the transmission shaft and propels the at least one centrifugal device. With rotation of the transmission shaft, the at least one centrifugal device generates a centrifugal force. When the driving device drives the transmission shaft to rotate at a preset rotational speed, the centrifugal force of the at least one centrifugal device forms an inertia effect which is applied to the transmission shaft. The transmission shaft having kinetic energy of the rotation of the driving device and kinetic energy of the inertia effect generated by the at least one centrifugal device at the same time is used for rotating the at least one driven device, such that when the at least one driven device generates a certain amount of energy (such as electric energy or kinetic energy), the driving device can reduce energy (such as electric energy or kinetic energy) consumed for driving the at least one driven device. That is to say, the driving device can reduce resources that need to be consumed (such as petroleum or natural gases), even can make energy generated by the at least one driven device greater than the energy consumed by the driving device for driving the at least one driven device.

A structure and technology of the transmission shaft having the centrifugal device of the present invention is illustrated through an embodiment.

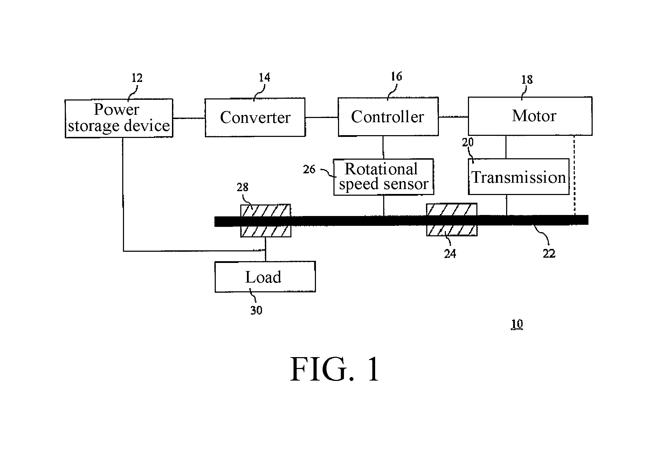

FIG. 1 is a system architectural view of a closed energy re-circulation system having a transmission shaft according to the present invention. In FIG. 1, a closed energy re-circulation system 10 comprises a power storage device 12, a converter 14, a controller 16, a motor 18, a transmission 20, a transmission shaft 22, a centrifugal device 24, a rotational speed sensor 26, a generator 28 and a load 30.

The power storage device 12 may be a lead acid battery, a nickel-metal hydride battery or a lithium battery.

The converter 14 is used to covert a low voltage of the power storage device 12 to a high voltage, and transmits the converted power supply to the controller 16. The converter 14 may be a DC-to-DC converter or a DC-to-AC converter.

The controller 16 receives the power supply transmitted by the converter 14, and outputs a control power supply to the motor 18 used as a driving device, so as to control running of the motor 18, for example, controlling a running rotational speed of the motor 18. The controller 16 may be an AC server, a DC server or a frequency converter; the motor may be an AC motor, a DC motor, a magnetic levitation motor or a permanent-magnet motor.

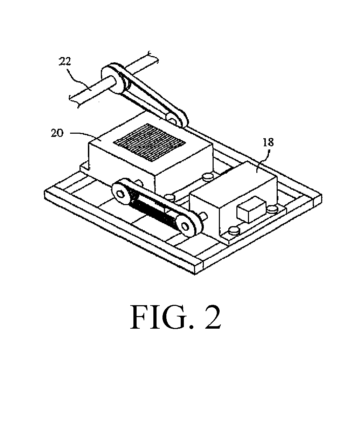

FIG. 2 is a schematic view of a connection relation among a transmission, a motor and a transmission shaft according to the present invention. In FIG. 1 and FIG. 2, the transmission 20 is disposed between the motor 18 and the transmission shaft 22. The transmission 20 coverts the running rotational speed of the motor 18 to different rotational speeds, so as to rotate the transmission shaft 22. The transmission 20 may increase or decrease the running rotational speed of the motor 18. The transmission 20 may be a non-continuous variable transmission or a continuous variable transmission. In another embodiment, the transmission 20 does not need to be disposed between the motor 18 and the transmission shaft 22, instead, the motor 18 directly connects and drives the transmission shaft 22.

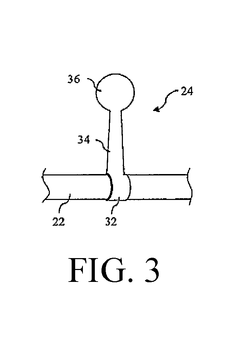

FIG. 3 is a schematic view of a centrifugal device disposed on a transmission shaft according to the present invention. In FIG. 3, the centrifugal device 24 is disposed on the transmission shaft 22. The centrifugal device 24 is formed by a coupling portion 32, a connection portion 34, and a sphere 36. The coupling portion 32 of the centrifugal device 24 is coupled to the transmission shaft 22. The structure of the centrifugal device 24 of the embodiment is not intended to limit the present invention, and any structure of the centrifugal device that may achieve functions of the centrifugal device 24 of this embodiment is applicable in the present invention.

In FIG. 1 to FIG. 3, when the transmission 20 rotates the transmission shaft 22 (in another embodiment, the motor 18 directly rotates the transmission shaft 22, as shown by dashed lines in FIG. 1), the transmission shaft 22 propels the centrifugal device 24 to rotate. The rotating centrifugal device 24 make the sphere 36 generate a centrifugal force. As a rotational speed of the centrifugal device 24 propelled by the transmission shaft 22 becomes higher, the centrifugal force generated by the sphere 36 is greater. When the transmission shaft 22 keeps rotating at a certain rotational speed, an inertia effect is formed by the centrifugal force of the sphere 36 and is applied to the transmission shaft 22.

The transmission shaft having kinetic energy of the rotation of the transmission 20 (the motor 18 in another embodiment, as shown by dashed lines in FIG. 1) and kinetic energy generated by the inertia effect of the sphere 36 of the centrifugal device 24 at the same time is used to rotate the generator 28 serving as the driven device. The transmission shaft 22 rotates the generator 28, such that the generator 28 generates electric power. The electric power generated by the generator 28 is provided for the power storage device 12 and the load 30. The generator 28 may be a DC generator or an AC generator.

The rotational speed sensor 26 detects the rotational speed of the transmission shaft 22 and generates a rotational speed signal. The rotational speed signal detected by the rotational speed sensor 26 is transmitted to the controller 16. The controller 16 controls the running rotational speed of the motor 18 according to the received rotational speed signal, that is to say, the controller 16 controls the rotational speed of the transmission shaft 22 indirectly.

An operation method of the closed energy re-circulation system 10 of this embodiment is hereinafter illustrated with references to FIG. 1 to FIG. 3.

First, the converter 14 coverts the low voltage of the power storage device 12 to the high voltage, and transmits the high-voltage power supply to the controller 16.

The controller 16 generates the control power supply from the received high-voltage power supply according the rotational speed signal of the rotational speed sensor 26, and outputs the control power supply to the motor 18 to control the running of the motor 18 (such as controlling the running rotational speed of the motor 18).

When the transmission shaft 22 is static or the rotational speed thereof does not reach the rotational speed set by the controller 16, the rotational speed sensor 26 transmits the detected rotational speed signal generated by the stillness or low rotational speed of the transmission shaft 22 to the controller 16. The rotational speed signal of stillness or low rotational speed is lower than a value of the rotational speed preset by the controller 16, and therefore, the controller 16 increases the control power output to the motor 18, such that the running rotational speed of the motor 18 is increased. The motor 18 with the increased rotational speed drives the transmission 20 to rotate the transmission shaft 22, such that the rotational speed of the transmission shaft 22 is increased (in another embodiment, the motor 18 directly rotates the transmission shaft 22, as shown by dashed lines in FIG. 1). The above operation steps are operated repeatedly, so as to gradually adjust the running rotational speed of the transmission shaft 22 to the rotational speed preset by the controller 16.

The transmission 20 is disposed between the motor 18 and the transmission shaft 22. Through a speed variable function of the transmission 20, the rotational speed of the transmission shaft 22 may have a multiple relation with the rotational speed of the motor 18. Therefore, the rotational speed of the transmission shaft 22 is increased, and the generator 28 rotated by the transmission shaft 22 can generate a better power generation efficiency.

The rotating transmission shaft 22 propels the sphere 36 of the centrifugal device 24 to rotate. The rotating sphere 36 generates the centrifugal force. As the rotational speed of the centrifugal device 24 propelled by the transmission shaft 22 becomes higher, the centrifugal force generated by the sphere 36 is greater. When the rotational speed of the transmission shaft 22 reaches the preset rotational speed, the centrifugal force of the sphere 36 forms an inertia effect. The inertia effect is applied to the transmission shaft 22 through the coupling portion 32 and the connection portion 34.

The transmission shaft 22 where the inertia effect is applied rotates the generator 28, such that the generator 28 generates electric power. The electric power generated by the generator 28 may be provided for the load 30 and may be used to charge the power storage device 12.

The power storage device 12 provides the power supply for the motor 18 through the converter 14 and the controller 16. The generator 28 generates the electric power to charge the power storage device 12, such that an energy re-circulation of a conversion from electric energy to kinetic energy and from kinetic energy to electric energy in the closed energy re-circulation system 10 is achieved.

When the rotational speed of the transmission shaft 22 reaches the preset rotational speed, the inertia effect formed by the centrifugal force of the centrifugal device 24 is applied to the transmission shaft 22, and the kinetic energy of the running motor 18 is applied to the transmission shaft 22, such that the generator 28 generates more electric power. In another situation, the generator 28 generates the electric power of a fixed amount. Since the inertia effect formed by the centrifugal force of the centrifugal device 24 is applied to the transmission shaft 22, the kinetic energy that the motor 18 applies to the transmission shaft 22 may be reduced, thereby improving the power generation efficiency of the closed energy re-circulation system 10 and even making the electric energy of the power generated by the generator 28 greater than the electric energy (the electric energy is provided by the controller 16) consumed by the motor 18 to rotate the generator 28 through the transmission shaft 22. In this manner, an efficacy of energy regeneration can be achieved.

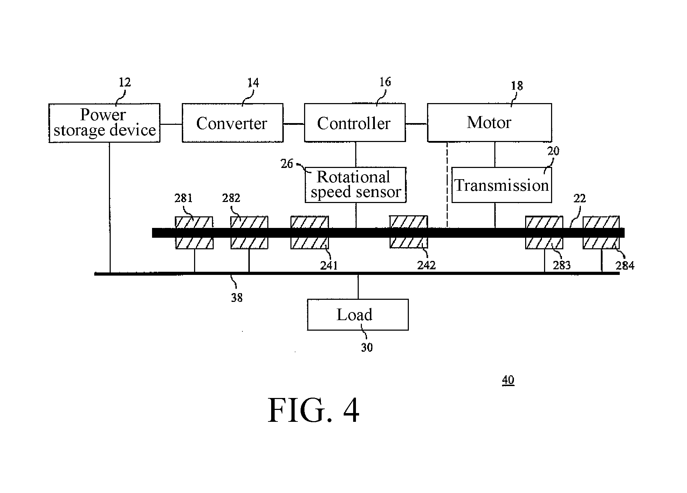

FIG 4 is a system architectural view of another closed energy re-circulation system having a transmission shaft according to the present invention. A structure of a closed energy re-circulation system 40 of FIG. 4 is different from the structure of the closed energy re-circulation system 10 of FIG. 1 in that: multiple centrifugal devices 241 and 242 are disposed on the transmission shaft 22, and the transmission shaft 22 rotates multiple generators 281, 282, 283 and 284. A power supply generated by the generators 281, 282, 283 and 284 is transmitted to a bus 38, and the power storage device 12 and the load 30 derive the power supply from the bus 38.

An operation method of the closed energy re-circulation system 40 of FIG. 4 is the same as the operation method of the closed energy re-circulation system 10 of FIG. 1. Descriptions of the operation method are omitted herein.

In another embodiment, the driving device may be a water turbine, a gas turbine or a blade. Such driving device uses water power, thermal power or wind power to respectively drive a hydroelectric generator, a thermal generator or a wind driven generator of the water turbine, the gas turbine, an engine, a turbine, a steam engine or a blade. Similarly, the system of the transmission shaft having the centrifugal device may enable such generator to have higher power generation efficiency and generate more electric power.

In another embodiment, the transmission shaft having the centrifugal device may be applied in vehicles such as cars and steamships. For example, an engine of the car rotates the transmission shaft having the centrifugal device, and the transmission shaft drives wheels to run. Similarly, the engine with the transmission shaft having the centrifugal device may consume fewer resources (such as gasoline) and generate higher running efficiency, therefore achieving efficacies of saving energy, reducing carbon and protecting environment.

An advantage of the present invention lies in that a transmission shaft having a centrifugal device is provided. When a driven device generates a certain amount of energy, an inertia effect formed by a centrifugal force of the centrifugal device is applied to the transmission shaft, which may reduce energy consumed by a driving device to drive the driven device, and may further make energy generated by the driven device greater than the energy consumed by the driving device to drive the driven device, so as to achieve an energy regeneration efficacy, thereby effectively reducing consumption of earth resources and effectively solving a problem of earth environmental protection.

Although the present invention is described above with reference to preferred embodiments and exemplary accompanying drawings, the embodiments should not be regarded as a limitation of the present invention. Any modifications, omissions and variations on content of shapes and implementations made by persons skilled in the art shall fall within the scope of the claims of the present invention.

## Claims

1. A transmission shaft, disposed between a driving device and at least one driven device, wherein
at least one centrifugal device is disposed on the transmission device, the at least one centrifugal device generates a centrifugal force and applies an inertia effect formed by the centrifugal force on the transmission shaft, so as to drive the transmission shaft to rotate.

2. The transmission shaft according to claim 1, wherein the driving device rotates the transmission shaft and propels the at least one centrifugal device, the transmission shaft rotates the at least one driven device.

3. The transmission shaft according to claim 1 or 2, wherein the at least one driven device is one of a generator, and a motion mechanism of a steamship or a car.

4. The transmission shaft according to any preceding claim, wherein a transmission is disposed between the driving device and the transmissions shaft, and the transmission is a continuous variable transmission or a non-continuous variable transmission.

5. The transmission shaft according to any preceding claim, wherein the driving device is one of a water turbine, a gas turbine, a motor, an engine, a turbine, a steam engine and a blade.

6. The transmission shaft according to claim 5, wherein running of the motor is controlled by a controller.

7. The transmission shaft according to claim 6, wherein the motor is one of a direct current (DC) motor, an alternating current (AC) motor, a magnetic levitation motor and a permanent-magnet motor, and the controller is one of a server or a frequency converter.

8. The transmission shaft according to claim 6 or 7, wherein a power supply of the controller is provided through a converter converting a low voltage of a power storage device to a high voltage.

9. The transmission shaft according to claim 8, wherein the at least one driven device produces electric power to charge the power storage device.

10. The transmission shaft according to claim 8 or 9, wherein the power storage device is one of a lead acid battery, a nickel-metal hydride battery and a lithium battery.

11. The transmission shaft according to any of claims 5 to 10, wherein a rotational speed of the transmission shaft is detected by a rotational speed sensor, a rotational speed signal detected by the rotational speed sensor is transmitted to the controller, and the controller controls the motor according to the rotational speed signal.

12. The transmission method of a transmission shaft, wherein the transmission shaft is disposed between a driving device and at least one driven device, the transmission method comprising:
generating, by at least one centrifugal device disposed on the transmission shaft, a centrifugal force; and applying an inertia effect formed by the centrifugal force to the transmission shaft, so as to drive the transmission shaft to rotate.

13. The transmission method according to claim 12, further comprising:
rotating, by the driving device, the transmission shaft, and propelling the centrifugal device; and
rotating, by the transmission shaft, the at least one driven device.

14. The transmission method according to claim 12 or 13, wherein a transmission changes a rotational speed of the driving device and drives the transmission shaft with the changed rotational speed.

15. The transmission method according to claim 12, 13 or 14, further comprising:
converting a low voltage of a power storage device to a high voltage, and providing the high voltage to a controller;
controlling, by the controller, running of the driving device according to the rotational speed of the transmission shaft; and
producing, by the at least one driven device, electric power to charge the power storage device.
